# EUROPEAN PATENT SPECIFICATION

(11) **EP 1 602 286 B1**
(45) Date of publication and mention of the grant of the patent: **28.10.2009**
(21) Application number: 04710539.0
(22) Date of filing: 12.02.2004
(51) Int. Cl.: A23L 1/30, A23L 2/52

(54) **OIL-IN-WATER TYPE EMULSION CONTAINING COENZYME Q10 AND PROCESS FOR PRODUCING THE SAME**
ÖL-IN-WASSER-EMULSION, DIE COENZYM Q10 ENTHÄLT, UND VERFAHREN ZU IHRER HERSTELLUNG
EMULSION DE TYPE HUILE-DANS-EAU RENFERMANT UN COENZYME Q10 ET PROCEDE D'OBTENTION

(30) Priority: 11.03.2003 JP 2003064906
(43) Date of publication of application: 07.12.2005
(73) Proprietor: KANEKA CORPORATION, Osaka-shi, Osaka 530-8288 (JP)
(72) Inventor: IKEHARA, Toshinori, Hyogo 6760011 (JP); OGINO, Koji, Kakogawa-shi Hyogo 6750036 (JP)
(74) Representative: HOFFMANN EITLE
(86) International application number: PCT/JP2004/001511
(87) International publication number: WO 2004/080208

(56) References cited:
- JP-A- 6 169 692
- JP-A- 8 000 170
- JP-A- 10 510 523
- JP-A- 2001 089 320
- JP-A- 2001 504 343
- JP-A- 2002 104 922
- JP-A- 2002 142 670
- JP-A- 2002 322 049
- JP-A- 2003 026 625
- JP-A- 2003 169 630
- JP-A- 2003 238 396
- JP-A- 2003 300 870

## Description

### Technical Field

The present invention relates to a stable oil-in-water emulsion composition containing coenzyme Q₁₀ and to a process for producing the composition. In particular, it relates to a stable oil-in-water emulsion composition that is possible to overcome various problems, such as the separation of coenzyme Q₁₀ or creaming, which would occur during long-term storage, and to a process for producing the composition.

### Background Art

Coenzyme Q₁₀, i.e., ubiquinone and its reduced form, ubiquinol, is a benzoquinone derivative widely distributed in living organisms. Coenzyme Q₁₀, which localizes in the mitochondria, lysosomes, Golgi bodies, microsomes, peroxisomes, cell membranes, and the like, is known to contribute to ATP-generation activation, antioxidative effects in the body, and membrane stabilization, and is a vital substance in the electron transport system for sustaining bodily functions. Coenzyme Q₁₀ is supplied through food or is synthesized in the body. The coenzyme Q₁₀ content *in vivo* significantly decreases with age and by various stresses that affect living bodies. Moreover, a decrease in the tissue level of coenzyme Q₁₀ is assumed to occur under conditions in which peroxides are readily generated in the body, such as hard exercise or extreme fatigue. A decreased coenzyme Q₁₀ content in the body causes degradation of ATP generation, deterioration of heart function, deterioration of resistance against oxidative stresses, and instability of biomembranes, and is detrimental to health. Supplying coenzyme Q₁₀ when in shortage promotes energy generation in the mitochondria, improves the antioxidative power of living bodies, and thus contributes to maintaining homeostasis.

Coenzyme Q₁₀, which is essential for maintaining the bodily functions of living organisms and tends to become deficient due to aging and stresses as described above, has been supplied through supplements or medicines in the form of tablets and capsules. However, healthy people or semi-healthy people whose degree of deficiency is small and who do not require medical treatment would find it more convenient to take the coenzyme Q₁₀ through beverages instead of tablets or capsules.

As a beverage containing coenzyme Q₁₀, a technology that uses polyoxyethylene sorbitan monooleate (PCT Japanese Translation Patent Publication No. 2001-504343) has been known. However, such a nonionic surface-active agent causes problems such as hemolysis and irritation and deletion of the mucosa. In most cases, this technology is not suitable for food applications. Moreover, conventional emulsification technology has failed to provide sufficient means for preventing the separation of coenzyme Q₁₀ and thus has not yet been put to practical application.

In response to changes in consumer preferences, the consumption of processed milk produced by reconstituting dairy products, e.g., milk-derived dry powder products such as powdered skim milk and whole powdered milk, and butter, with water has shown an increase when compared with beverages, such as milk, produced from raw milk. In particular, the consumption of processed milk with particular nutrients has steadily increased due to the recent health-conscious trends. However, when the processed milk is stored over a long term, creaming may occur in the course of distribution and preservation. Here, "creaming" is a phenomenon whereby emulsified fat globules partly lose their stability to become creamy or to form a ring. Moreover, a homogeneous emulsification state cannot be maintained because fat and oil components become separated. In particular, when coenzyme Q₁₀, which has low lipid solubility, is added as the nutrient, a significantly large degree of separation or creaming occurs. In other words, the lipid solubility of coenzyme Q₁₀ is temperature dependent, e.g., approximately 1% at 20° C, and decreases with decreasing temperature. Thus, it has been difficult to maintain a homogeneous emulsification state when a large amount of coenzyme Q₁₀ exceeding the solubility is added.

In order to overcome the problem of creaming and the like, many proposals have been made regarding combinations of thickeners and emulsifiers such as polyglycerin fatty acid esters, sucrose fatty acid esters, and organic acid esters of monoglycerides. These proposals have achieved some progress regarding emulsion stability; however, emulsifiers produce abnormal tastes and increase viscosity. As a result, the beverage lacks a refreshing taste and is not flavorful (Japanese Unexamined Patent Application Publication No. 2002-142670 and Japanese Unexamined Patent Application Publication No. 6-169692). Furthermore, these technologies cannot sufficiently prevent separation or creaming when coenzyme Q₁₀ is contained.

The applicant has proposed a fat and oil emulsion composition containing a complex of organic acid esters of monoglycerides and a milk protein (Japanese Patent No. 3103481). That patent is directed to providing a rich milk flavor, taste, and body, and does not present any solutions regarding prevention of creaming and separation of lipid-soluble substances. Furthermore, since the ratio of the organic acid esters of monoglycerides relative to the milk protein is large, the median diameter of fat globules of the fat and oil emulsion composition determined from EXAMPLES and COMPARATIVE EXAMPLES was large, i.e., at least 0.90 pm, whereas the median diameter of this application is not less than 0.8 µm. Moreover, that patent neither discloses nor suggests the addition of coenzyme Q₁₀.

An object of the present invention is to provide an oil-in-water emulsion composition that prevents separation of coenzyme Q₁₀ and creaming during storage, maintains a stable emulsification state over a long term exceeding two weeks, and does not impair flavor or taste. In particular, separation of coenzyme Q₁₀ generates orange-colored inhomogeneous parts in the product containing the oil-in-water emulsion composition, resulting in adhesion of highly viscous substances onto the walls of a container. Such a phenomenon is not preferable in terms of the cosmetic appearance of food.

### Disclosure of Invention

The Inventors have conducted extensive investigations to overcome the problems described above and found that size-reduction of fat globules and stable emulsification can be achieved by preparing the oil-in-water emulsion composition using a complex of organic acid esters of monoglycerides and a milk protein. The inventors have thus succeeded in obtaining a stable oil-in-water emulsion composition that does not undergo the separation of coenzyme Q₁₀ or creaming and have made the present invention.

In particular, a first aspect of the present invention relates to an oil-in-water emulsion composition containing coenzyme Q₁₀ in the oil phase and a complex containing organic acid esters of monoglycerides and a milk protein, characterized in that the complex is used as an emulsifier. According to a preferred embodiment, the oil-in-water emulsion composition has the oil phase containing edible fat and oil. According to a more preferred embodiment, in the oil-in-water emulsion composition, the quantity of the organic acid esters of monoglycerides relative to the entirety of the milk protein is 2 to 20 percent by weight. According to a yet more preferred embodiment, the organic acid esters of monoglycerides in the oil-in-water emulsion composition contains at least one selected from the group consisting of succinic acid esters of monoglycerides, diacetyltartaric acid esters of monoglycerides, citric acid esters of monoglycerides, lactic acid esters of monoglycerides, and acetic acid esters of monoglycerides. According to a still more preferred embodiment, the oil-in-water emulsion composition is characterized in that the median diameter of fat globules emulsified by the complex containing the organic acid esters of monoglycerides and the milk protein is not more than 0.8 µm. According to a most preferred embodiment, the oil-in-water emulsion composition is characterized in that the median diameter of fat globules emulsified by the complex containing the organic acid esters of monoglycerides and the milk protein is not more than 0.6 µm.

A second aspect of the present invention provides a method for making the oil-in-water emulsion composition described above. A third aspect of the present invention provides a beverage or food containing the oil-in-water emulsion composition described above.

The present invention will now be described in detail. In the present invention, "coenzyme Q₁₀" means ubiquinone and its reduced form, ubiquinol, and is contained in the oil phase of the oil-in-water emulsion composition.

Edible fat and oil used in the present invention are fat and oil commonly used in food. Examples of edible fat and oil include soybean oil, rapeseed oil, corn oil, safflower oil, palm oil, coconut oil, milk fat, medium-chain triglycerides (MCT), fish oil, fractionated oil thereof, hydrogenated oil thereof, transesterified oil thereof, and partial glycerides such as diglycerides. The oil phase content in the entirety of the oil-in-water emulsion composition is preferably 0.1 to 20 percent by weight. At an oil phase content of less than 0.1 percent by weight, richness derived from the fat and oil in the oil phase that is felt at the throat may be insufficient; moreover, it may be difficult to add a required amount of coenzyme Q₁₀ in the oil phase. At an oil phase content exceeding 20 percent by weight, the median diameter of the fat globules may exceed 0.8 µm, and a creaming phenomenon, i.e., surfacing of fat globules, may occur during long-term storage exceeding three months.

In the present invention, the oil phase components in the oil-in-water emulsion composition are emulsified by a complex of organic acid esters of monoglycerides and a milk protein. The amount of the additive complex is preferably 0.2 to 12.0 percent by weight of the entirety of the oil-in-water emulsion composition. At a complex content less than 0.2 percent by weight, creaming may occur within several days. At a complex content exceeding 12.0 percent by weight, powdered skim milk, which is the source of the milk protein of the complex, may not sufficiently dissolve and thus may not form a complex with the organic acid esters of monoglycerides.

The milk protein used in the present invention may be a fractionated milk protein such as casein but is preferably powdered milk such as skim milk powder or whole milk powder from the standpoint of flavor or taste of the emulsion product. In other words, ingredients that have the same composition and flavor as that of skim milk or regular milk when reconstituted in water are preferable.

The total content of the milk powders used in the present invention is preferably 0.5 to 30 percent by weight in terms of solid non-fat. At a content less than 0.5 percent by weight, the total amount of the milk protein that forms a complex with the organic acid esters of monoglycerides becomes insufficient. As a result, a satisfactory emulsion cannot be achieved, and the flavor may be impaired. At a content exceeding 30 percent by weight, the dissolution of the powdered milk may be hindered, and sediments of lactose in the composition may be generated after long-term storage due to a decreased solubility.

The organic acid esters of monoglycerides used in the present invention may be any but is preferably at least one selected from the group consisting of succinic acid esters of monoglycerides, diacetyltartaric acid esters of monoglycerides, citric acid esters of monoglycerides, lactic acid esters of monoglycerides, and acetic acid esters of monoglycerides. Hydrophobic groups of these organic acid esters of monoglycerides are preferably saturated fatty acids in order to sterically achieve effective bonding.

The ratio of the organic acid esters of monoglycerides to the milk protein is vital for increasing the stability of the oil-in-water emulsion composition and for reducing the median diameter of the fat globules. Thus, emulsification is performed using a complex prepared by dissolving 2 to 20 parts by weight of the organic acid esters of monoglycerides in 100 parts by weight of the milk protein. A complex prepared using less than 2 parts by weight of the organic acid esters of monoglycerides relative to the milk protein may cause creaming of fat globules and is thus unsuitable. At an amount of the organic acid esters of monoglycerides exceeding 20 parts by weight relative to the milk protein, excess organic acid esters of monoglycerides may not form electrostatic bonds or hydrophobic bonds with the milk protein and may settle in the aqueous solution of the milk protein.

A method for preparing the complex containing the organic acid esters of monoglycerides and the milk protein used in the present invention will now be described. First, a container, such as a tank equipped with a dissolver, is filled with a predetermined amount of water, and a predetermined amount of milk powder is dissolved in the water. No special device is necessary for dissolving. The milk powder is dissolved using a typical stirrer, such as a turbine stirrer or a paddle stirrer, while controlling the temperature within the range of 60 to 65 ° C by heating. Subsequently, a predetermined amount of the organic acid esters of monoglycerides is gradually added and dissolved. Under these conditions, the organic acid esters of monoglycerides, which is normally insoluble in water, dissolves as it forms electrostatic or hydrophobic bonds with the milk protein. The fact that an ionic emulsifier and a protein form a complex is well known. The fact that a dissolved organic acid esters of monoglycerides and a milk protein form a complex is apparent from the fact that the organic acid esters of monoglycerides does not precipitate even when the mixture or solution of the organic acid esters of monoglycerides and the milk protein is cooled to a temperature below the melting point of the organic acid esters of monoglycerides.

In this process, the homogenizing pressure of a homogenizer is preferably controlled so that the median diameter of the fat globules emulsified by the complex of the organic acid esters of monoglycerides and the milk protein is not more than 0.8 µm. At a median diameter of fat globules exceeding 0.8 µm, fat globules surface within several days to two weeks, thereby causing creaming. More preferably, the median diameter is not more than 0.6 µm in order to extend the long-term storage date to at least one month. No lower limit of the median diameter of the fat globules is set; however, there is a limitation in manufacturing due to varying stability dependent upon the system used. The stability of the emulsified fat globules tends to improve by performing the homogenization before and after the sterilization or pasteurization step during manufacturing. However, sufficient quality can be achieved at 10 to 30 MPa without requiring particularly high pressure. The median diameter of the fat globules can be determined by a typical laser diffraction particle size distribution analyzer or the like.

The oil-in-water emulsion composition may contain a food additive commonly used in creams. Moreover, lipid-soluble food components other than coenzyme Q₁₀ may be contained in the fat and oil used. Here, the term "lipid-soluble food component" refers to a food component that easily dissolves in edible fat and oil. The lipid-soluble food component may be any and may contain various carotenoids, lipid-soluble vitamins, and the like.

A method for making the oil-in-water emulsion composition of the present invention will now be described. First, a container, such as a tank equipped with a dissolver, is filled with a predetermined amount of water, and a predetermined amount of milk powder is dissolved in the water using a typical stirrer, such as a turbine stirrer or a paddle stirrer, with heating at 60 to 65 ° C. Subsequently, a predetermined amount of organic acid esters of monoglycerides is gradually added and dissolved to prepare a complex of the organic acid esters of monoglycerides and the milk protein. A predetermined amount of coenzyme Q₁₀ is added to the solution of the complex containing the organic acid esters of monoglycerides and the milk protein to perform preliminary emulsification. If necessary; coenzyme Q₁₀ may be dissolved in a predetermined amount of edible fat and oil at 50 to 70° C in advance while preventing the coenzyme Q₁₀ to decompose and be added to the complex solution. The resulting emulsion liquid is then subjected to a standard method for producing milk or creams. In particular, the liquid is subjected to a homogenizing pressure by a homogenizer or the like, is heated in the course of direct steam sterilization, direct steam pasteurization, indirect sterilization, and the like, and is then subjected to a predetermined homogenizing pressure using a homogenizer or the like. The liquid is cooled to approximately 5° C and charged in a container to complete the preparation of the organic acid esters of monoglycerides of the present invention. Alternatively, sterile filling through ultrahigh temperature (UHT) sterilization may be performed to prepare the oil-in-water emulsion composition, which can withstand long-term storage at room temperature.

### Best Mode for carrying out the Invention

The present invention will now be described in detail by way of nonlimiting examples.

### [Method for evaluating creaming]

An oil-in-water emulsion composition was stored at 5° C. The emulsion state was examined daily to visually confirm the occurrence of creaming, i.e., some of emulsified fat globules losing stability, thereby becoming creamy or forming a ring. The evaluation was based on the number of days taken before the appearance of the creaming.

### [Separation of coenzyme Q₁₀]

An oil-in-water emulsion composition was stored at 5°C. The emulsion state was examined daily to visually confirm the occurrence of an orange tint (color unevenness in appearance) in the creamed portions that were previously uniformly light yellow, the orange tint occurring as a result of the separation of coenzyme Q₁₀. The evaluation was based on the number of days taken before the appearance of the orange tint.

### (EXAMPLE 1)

To 86.7 parts by weight of water at 40 to 45° C, 8.5 parts by weight of powdered skim milk (milk protein content: 2.89 parts by weight) was gradually added. The mixture was stirred until the powdered skim milk was dissolved without leaving any aggregates. After confirming that the resulting solution was heated to 60° C, 0.3 part by weight of a succinic acid esters of monoglycerides (trade name: Poem B-10, manufactured by Riken Vitamin Co., Ltd.) was gradually added and dissolved to prepare a water phase, i.e., a complex solution containing the organic acid esters of monoglycerides and the milk protein. In the complex solution, the weight ratio of the milk protein to the organic acid esters of monoglycerides was 100:10.4. Meanwhile, 4 parts by weight of unsalted butter (Yotsuba Inc.) was heated to 60° C, and 0.5 part by weight of coenzyme Q₁₀ (99.2% purity, manufactured by Kaneka Corporation) was added and dissolved in the butter to prepare an oil phase. The oil phase was added to the previously described water phase to prepare an emulsion liquid. The emulsion liquid was stirred for ten minutes, subjected to a homogenizing pressure of 10 MPa using a two-stage valve homogenizer, and pasteurized at 145° C using a steam injection method. The liquid was then cooled to 60° C, subjected to a homogenizing pressure of 20 MPa using a two-stage valve homogenizer, cooled to 5° C, and charged in a container to prepare an oil-in-water emulsion composition.

The median diameter of the fat globules of the oil-in-water emulsion composition determined using LA-500P manufactured by Horiba, Ltd. was 0.56 µm. The oil-in-water emulsion composition was stored at 5 ° C, and the emulsion state was examined daily. No creaming phenomenon or separation of coenzyme Q₁₀ was observed for three months, during which a stable emulsion state was maintained. The ingredients and the results are shown in Table 1.

**Table I Ingredients of the oil-in-water emulsion composition, the diameter of fat globules, and the evaluation results**

| (unit: part by weight unless otherwise indicated) | | | | | | | | | |
|---|---|---|---|---|---|---|---|---|---|
| | EX. 1 | EX. 2 | EX. 3 | EX. 4 | EX. 5 | C. EX. 1 | C. EX. 2 | C. EX. 3 | C. EX. 4 |
| [Oil phase] | | | | | | | | | |
| <Fat and oil component> | | | | | | | | | |
| Unsalted butter | 4 | 8 | | 4 | 4 | 4 | 4 | 4 | - |
| Corn oil | | | 15 | | | | | | |
| <Coenzyme Q₁₀> | 0.5 | 1.0 | 3.0 | 0.5 | 0.5 | 0.5 | 0.5 | 0.5 | - |
| < Organic acid esters of monoglycerides > | | | | | | | | | |
| Succinic acid esters of monoglycerides | | | | | | | 0.3 | | |
| (Content by weight relative to 100 of milk protein) | 0.0 | 0.0 | 0.0 | 0.0 | 0.0 | 0.0 | 10.4 | 0.0 | 0.0 |
| [Water phase] | | | | | | | | | |
| <Water> | 86.7 | 82.3 | 73.1 | 86.5 | 86.7 | 87.0 | 86.7 | 86.97 | 86.65 |
| <Milk protein> | | | | | | | | | |
| Powdered skim milk (milk protein content: 2.89 parts) | 8.5 | 8.5 | 8.5 | 8.5 | 8.5 | 8.5 | 8.5 | 8.5 | 8.5 |
| < Organic acid esters of monoglycerides > | | | | | | | | | |
| Succinic acid esters of monoglycerides | 0.3 | 0.2 | 0.4 | 0.5 | 0.3 | | | 0.03 | 0.65 |
| (Content by weight relative to 100 of milk protein) | 10.4 | 6.9 | 13.8 | 17.3 | 10.4 | 0.0 | 0.0 | 1.0 | 22.5 |
| Total | 100 | 100 | 100 | 100 | 100 | 100 | 100 | 100 | 95.8 |
| Homogenizing pressure after pasteurization (MPa) | 20 | 25 | 25 | 20 | 8 | 20 | 20 | 20 | - |
| Median diameter of fat globules | 0.56 | 0.53 | 0.59 | 0.50 | 0.73 | 1.30 | 0.99 | 1.05 | - |
| Creaming evaluation *1 | > 3 months | > 3 months | > 3 months | > 3 months | 20 days | 3 days | 3 days | 10 days | - |
| Separation of coenzyme Q₁₀ *2 | >3 months | >3 months | >3 months | >3 months | 30 days | 3 days | 7 days | 15 days | - |

| | | | | | | | | | |
|---|---|---|---|---|---|---|---|---|---|
| *1: Days taken before occurrence of creaming *2: Days taken before separation of coenzyme Q₁₀ EX.: EXAMPLE C. EX.: COMPARATIVE EXAMPLE | | | | | | | | | |

### (COMPARATIVE EXAMPLE 1)

An oil-in-water emulsion composition was prepared as in EXAMPLE 1 except that no succinic acid ester of monoglycerides was used and the amount of water was changed to 87.0 parts by weight. In other words, emulsification of the oil component by the complex of the organic acid esters of monoglycerides and the milk protein was not performed.

The median diameter of the fat globules of this sample was 1.30 µm. The sample was stored at 5° C, and the emulsion state was examined daily. A light-yellow layer was observed in the upper portion after one day. A thick, yellowish cream band was observed in the upper portion of the container after three days, i.e., a creaming phenomenon was clearly observed. The cream band was tinted orange at several locations. Separation of coenzyme Q₁₀ was clearly observed in the strongly tinted locations.

### (COMPARATIVE EXAMPLE 2)

To 86.7 parts by weight of water at 40 to 45° C, 8.5 parts by weight of powdered skim milk (milk protein content: 2.89 parts by weight) was gradually added. The mixture was stirred until the powdered skim milk was dissolved without leaving any aggregates. The resulting solution was heated to 60° C to prepare the water phase. Meanwhile, 4 parts by weight of unsalted butter was heated to 60° C, and 0.3 part by weight of the succinic acid esters of monoglycerides and 0.5 part by weight of coenzyme Q₁₀ were added to and dissolved in the butter to prepare the oil phase. The oil phase was added to the previously described water phase to prepare an emulsion liquid. The composition of the emulsion liquid was the same as that of EXAMPLE 1, but the succinic acid esters of monoglycerides was dissolved in the oil phase so as not to produce a complex of the organic acid esters of monoglycerides and the milk protein. An oil-in-water emulsion composition was prepared from the emulsion liquid as in EXAMPLE 1.

The median diameter of the fat globules of the oil-in-water emulsion composition was 0.99 µm. A sample was stored at 5 ° C and the emulsion state of the sample was examined daily. A significant part of the upper portion in the container was colored yellow after three days, i.e., the creaming phenomenon was clearly observed. After seven days, the cream band was tinted orange at several locations, and separation of coenzyme Q₁₀ was clearly observed in the strongly tinted locations.

### (COMPARATIVE EXAMPLE 3)

An oil-in-water emulsion composition was prepared as in EXAMPLE 1 except that the amount of the succinic acid esters of monoglycerides was changed to 0.03 parts by weight, and the amount of water was changed to 86.97 parts by weight. The median diameter of the fat globules of a sample was 1.05 µm. The sample was stored at 5° C, and the emulsion state was examined daily. A creaming phenomenon was observed in the upper portion of the container after ten days. After fifteen days, the cream band was tinted orange at several locations, and separation of coenzyme Q₁₀ was clearly observed in the strongly tinted locations.

### (COMPARATIVE EXAMPLE 4)

To 86.65 parts by weight of water at 40 to 45° C, 8.5 parts by weight of powdered skim milk (milk protein content: 2.89 parts by weight) was gradually added. The mixture was stirred until the powdered skim milk was dissolved without leaving any aggregates. After confirming that the resulting solution was heated to 60° C, 0.65 part by weight of the succinic acid esters of monoglycerides was gradually added in an attempt to prepare a water phase, i.e., a complex solution containing organic acid esters of monoglycerides and a milk protein. Since the organic acid esters of monoglycerides was in excess and was not sufficiently dissolved, the experiment was discontinued. The weight ratio of the milk protein to the organic acid esters of monoglycerides at this stage was 100:22.5.

### (EXAMPLE 2)

To 82.3 parts by weight of water at 40 to 45°C, 8.5 parts by weight of powdered skim milk (milk protein content: 2.89 parts by weight) was gradually added. The mixture was stirred until the powdered skim milk was dissolved without leaving any aggregates. After confirming that the resulting solution was heated to 60° C, 0.2 part by weight of the succinic acid esters of monoglycerides was gradually added and dissolved to prepare a water phase, i.e., a complex solution containing the organic acid esters of monoglycerides and the milk protein. In the complex solution, the weight ratio of the milk protein to the organic acid esters of monoglycerides was 100:6.9. Meanwhile, 8.0 parts by weight of unsalted butter was heated to 60° C, and 1.0 part by weight of coenzyme Q₁₀ was added and dissolved in the butter to prepare the oil phase. The oil phase was added to the previously described water phase to prepare an emulsion liquid. The emulsion liquid was stirred for ten minutes, subjected to a homogenizing pressure of 20 MPa using a two-stage valve homogenizer, and pasteurized at 145° C by a steam injection method. The liquid was then cooled to 60°C, subjected to a homogenizing pressure of 25 MPa using the two-stage valve homogenizer, cooled to 5° C, and charged in a container to prepare an oil-in-water emulsion composition.

The median diameter of the fat globules of this composition was examined with LA-500P manufactured by Horiba, Ltd. The median diameter was 0.53 µm. A sample was stored at 5° C, and the emulsion state was examined daily. Changes such as creaming phenomena or separation of coenzyme Q₁₀ did not occur for three months and a stable emulsion state was maintained.

### (EXAMPLE 3)

To 73.1 parts by weight of water at 40 to 45° C, 8.5 parts by weight of powdered skim milk (milk protein content: 2.89 parts by weight) was gradually added. The mixture was stirred until the powdered skim milk was dissolved without leaving any aggregates. After confirming that the resulting solution was heated to 60° C, 0.4 part by weight of the succinic acid esters of monoglycerides was gradually added and dissolved to prepare a water phase, i.e., a complex solution containing the organic acid esters of monoglycerides and the milk protein. Meanwhile, 15 parts by weight of corn oil was heated to 60° C, and 3 parts by weight of coenzyme Q₁₀ was dissolved in the corn oil to prepare an oil phase. The oil phase was mixed with the water phase to prepare an emulsion liquid. In the complex solution, the weight ratio of the milk protein to the organic acid esters of monoglycerides was 100:13.8.

The median diameter of the fat globules of a sample was 0.59 µm. The sample was stored at 5 ° C and the emulsion state was observed daily. Changes such as creaming phenomena or separation of coenzyme Q₁₀ did not occur for three months during which a stable emulsion state was maintained.

### (EXAMPLE 4)

An oil-in-water emulsion composition was prepared as in EXAMPLE 1 but with 0.5 parts by weight of the succinic acid esters of monoglycerides and 86.5 parts by weight of water. Accordingly, in the complex of this EXAMPLE, the ratio of the milk protein to the organic acid esters of monoglycerides was 100:17.3.

The median diameter of the fat globules of the oil-in-water emulsion composition was 0.50 µm. The oil-in-water emulsion composition was stored at 5° C and the emulsion state was observed daily. Changes such as creaming phenomena or separation of coenzyme Q₁₀ did not occur for three months during which a stable emulsion state was maintained.

### (EXAMPLE 5)

An emulsion liquid was prepared with the same ingredients and process as in EXAMPLE 1. An oil-in-water emulsion composition was prepared from the emulsion liquid as in EXAMPLE 1 except that the homogenizing pressure after the pasteurization was changed to 8 MPa. The median diameter of the fat globules of the oil-in-water emulsion composition was 0.73 µm. The oil-in-water emulsion composition was stored at 5° C, and the emulsion state was observed daily. A small degree of creaming phenomenon was observed at the upper portion of the container after 20 days, and orange tints were produced at several locations after 30 days. The separation of coenzyme Q₁₀ was clearly observed in the strongly tinted locations.

### (EXAMPLE 6) Production of processed milk

In 900 ml of commercially available milk, 100 ml of the oil-in-water emulsion composition prepared in EXAMPLE 1 was aseptically mixed. The mixture was homogeneously mixed to prepare processed milk containing 50 mg of coenzyme Q₁₀ in 100 ml of the processed milk. The processed milk was stored at 5° C, and the emulsion state was examined daily. Changes such as formation of oil rings did not occur and a homogenous emulsion state was maintained for two weeks.

### (EXAMPLE 7) Production of milk bread

Seventy parts by weight of wheat flour, 2 parts by weight of yeast, 0.1 part by weight of yeast food, and 40 parts by weight of water were mixed with a mixer to prepare a sponge dough (kneading temperature: 24 ° C). After four hours of preliminary proving, 30 parts by weight of wheat flour, 5 parts by weight of sugar, 6 parts by weight of commercially available margarine (Neo Margarine manufactured by Kaneka Corporation), 2 parts by weight of salt, 3 parts by weight of powdered skim milk, 8 parts by weight of the oil-in-water emulsion composition of EXAMPLE 3, and 15 parts by weight of water were added to the sponge dough to prepare a main dough. After 25 minutes of floor time, the dough was divided. After 25 minutes of bench time, the dough was shaped. Milk bread was then prepared with 50 minutes of final proving at 38 ° C and 35 minutes of baking at 180 ° C. Neither the appearance nor the inner part of the prepared bread had color irregularities resulting from ubiquinone.

### (EXAMPLE 8) Preparation of milk tea

In 50 grams of a hot-water extract of tea leaves, 60 g of granulated sugar, 0.5 g of sucrose fatty acid ester, and 1 g of sodium bicarbonate were dissolved. To the solution, 50 g of oil-in-water emulsion composition of EXAMPLE 3 and water were added to obtain 1,000 ml of a flavorful emulsion product. After being heated to 80° C, the emulsion product was charged in a 190 ml can container and subjected to retort sterilization for 20 minutes at 124° C to make a coenzyme Q₁₀-containing canned milk tea beverage with a rich flavor characteristic of fat and oil. The milk tea did not undergo changes such as formation of oil rings or separation of coenzyme Q₁₀ and maintained a homogeneous emulsion state for three months.

### (EXAMPLE 9) Preparation of custard cream

Two egg yolks were gently beaten, and two tablespoons from 200 ml of the oil-in-water emulsion composition of EXAMPLE 1 were added to the egg yolks. The mixture was stirred with a wooden spatula. Two tablespoons of wheat flour and 40 g of sugar were added to the mixture and thoroughly mixed. The remainder of the oil-in-water emulsion composition was gradually added to the mixture so as not to produce inhomogeneity and the mixture was cooked at 90° C for 30 minutes until the mixture became creamy. After cooling, vanilla extract was added to the mixture and was thoroughly beaten to obtain a flavorful custard cream containing coenzyme Q₁₀.

### Industrial Applicability

A coenzyme Q₁₀-containing oil-in-water emulsion composition that prevents separation of coenzyme Q₁₀, creaming, and the like and that can withstand long-term storage exceeding two weeks can be prepared by emulsifying the coenzyme Q₁₀-containing oil phase using a complex containing organic acid esters of monoglycerides and a milk protein.

## Claims

1. An oil-in-water emulsion composition comprising
- coenzyme Q₁₀ in the oil phase, and
- a complex (i) comprising organic acid esters of monoglycerides and a milk protein
wherein the organic acid esters of monoglycerides is contained in an amount of 2-20 pbw per 100 pbw of the milk protein.

2. The oil-in-water emulsion composition of claim 1,
wherein the oil phase comprises edible fat and oil.

3. The oil-in-water emulsion composition of claim 1,
wherein the organic acid esters of monoglycerides is at least one selected from succinic esters of monoglycerides, diacetyltartaric acid esters of monoglycerides, citric acid esters of monoglycerides, lactic acid esters of monoglycerides, and acetic acid esters of monoglycerides.

4. The oil-in-water emulsion composition of claim 1,
wherein the median diameter of fat globules emulsified by the complex (i) is not more than 0.8 µm.

5. The oil-in-water emulsion composition of claim 4,
wherein the median diameter is not more than 0.6 µm.

6. A process for production of the oil-in-water emulsion composition of any of claims 1-5.

7. A beverage or food containing the oil-in-water emulsion composition of any of claims 1-5.

## Patentansprüche

1. Öl-in-Wasser-Emulsionszusammensetzung, umfassend:
- Coenzym Q₁₀ in der Ölphase und
- einen Komplex (i), umfassend organische Säureester von Monoglyceriden und ein Milchprotein,
worin die organischen Säureester von Monoglyceriden in einer Menge von 2 bis 20 Gew.-Teilen pro 100 Gew.-Teile des Milchproteins enthalten sind.

2. Öl-in-Wasser-Emulsionszusammensetzung gemäss Anspruch 1, worin die Ölphase essbares Fett und Öl umfasst.

3. Öl-in-Wasser-Emulsionszusammensetzung gemäss Anspruch 1, worin die organischen Säureester von Monoglyceriden mindestens ein Vertreter, ausgewählt aus Bernsteinsäureestern von Monoglyceriden, Diacetyl-Weinsäureestern von Monoglyceriden, Zitronensäureestern von Monoglyceriden, Milchsäureestern von Monoglyceriden und Essigsäureestern von Monoglyceriden, sind.

4. Öl-in-Wasser-Emulsionszusammensetzung gemäss Anspruch 1, worin der mittlere Durchmesser der durch den Komplex (i) emulgierten Fetttropfen nicht mehr als 0,8 µm beträgt.

5. Öl-in-Wasser-Emulsionszusammensetzung gemäss Anspruch 4, worin der mittlere Durchmesser nicht mehr als 0,6 µm beträgt.

6. Verfahren zur Herstellung der Öl-in-Wasser-Emulsionszusammensetzung gemäss mindestens einem der Ansprüche 1 bis 5.

7. Getränk oder Nahrungsmittel, das die Öl-in-Wasser-Emulsionszusammensetzung gemäss mindestens einem der Ansprüche 1 bis 5 enthält.

## Revendications

1. Composition d'émulsion de type huile-dans-eau comprenant
- la coenzyme Q10 dans la phase huileuse, et
- un complexe (i) comprenant des esters d'acides organiques de monoglycérides et une protéine du lait,
dans laquelle les esters d'acides organiques de monoglycérides sont contenus en une quantité de 2-20 parties en masse pour 100 parties en masse de la protéine du lait.

2. Composition d'émulsion de type huile-dans-eau selon la revendication 1, dans laquelle la phase huileuse comprend une matière grasse et une huile comestibles.

3. Composition d'émulsion de type huile-dans-eau selon la revendication 1, dans laquelle les esters d'acides organiques de monoglycérides sont au moins un ester choisi parmi les esters succiniques de monoglycérides, les esters d'acide diacétyltartrique de monoglycérides, les esters d'acide citrique de monoglycérides, les esters d'acide lactique de monoglycérides et les esters d'acide acétique de monoglycérides.

4. Composition d'émulsion de type huile-dans-eau selon la revendication 1, dans laquelle le diamètre médian des globules de matière grasse émulsionnés par le complexe (i) n'est pas supérieur à 0,8 µm.

5. Composition d'émulsion de type huile-dans-eau selon la revendication 4, dans laquelle le diamètre médian n'est pas supérieur à 0,6 µm.

6. Procédé de production d'une composition d'émulsion de type huile-dans-eau selon l'une quelconque des revendications 1-5.

7. Boisson ou aliment contenant la composition d'émulsion de type huile-dans-eau selon l'une quelconque des revendications 1-5.
